# EUROPEAN PATENT SPECIFICATION

(11) **EP 0 689 271 B1**
(45) Date of publication and mention of the grant of the patent: **14.10.1998**
(21) Application number: 95114440.1
(22) Date of filing: 18.02.1994
(51) Int. Cl.: H02H 3/33

(54) **An earth leakage unit**
Erdschlusseinheit
Une unité de courant de défaut à la terre

(30) Priority: 09.07.1993 ZA 9304962
(43) Date of publication of application: 27.12.1995
(62) Divisional of application: 94301166.8
(73) Proprietor: CIRCUIT BREAKER INDUSTRIES LIMITED, Elandsfontein Transvaal Province (ZA)
(72) Inventor: Bagalini, Dante, Johannesburg, Transvaal Province (ZA)
(74) Representative: Mounteney, Simon James

(56) References cited:
- FR-A- 2 394 911
- GB-A- 2 244 398

## Description

**THIS INVENTION** relates to an earth leakage unit .

GB-A-2 244 398 discloses an earth leakage unit having a core, a live input terminal for connection to a live supply cable, a neutral input terminal for connection to as neutral supply cable, a live wire connected to the live input terminal at one end and connectable to a load at its other end, a neutral wire connected to the neutral input terminal at one end and connectable to the load at its other end, the live and neutral wires passing through the core, a primary coil on the core for detecting a current imbalance between the live and neutral wires, an auxiliary coil on the core, a current blocking device in series with the auxiliary coil for permitting a current flow through the auxiliary coil when a voltage is applied across the auxiliary coil and the current blocking device that is greater than a predetermined value, a DC supply arrangement connected between the live and neutral wires, and a test button connected between the DC supply arrangement and a further coil.

According to the invention there is provided an earth leakage unit which includes
a core;
a live input terminal for connection to a live supply cable;
a neutral input terminal for connection to a neutral supply cable;
a live wire connected to the live input terminal at one end and connectable to a load at its other end;
a neutral wire connected to the neutral input terminal at one end and connectable to the load at its other end, the live and neutral wires passing through the core;
a primary coil on the core for detecting a current imbalance between the live and neutral wires;
an auxiliary coil on the core;
a current blocking device in series with the auxiliary coil for permitting a current flow through the auxiliary coil when a voltage is applied across the auxiliary coil and the current blocking device that is greater than a predetermined value;
a DC supply arrangement connected between the live and neutral wires; and
a test button connected between the DC supply arrangement and the auxiliary coil;
characterised thereby that the serially connected auxiliary coil and current blocking device are connected between the live and neutral wires such that current flows through the auxiliary coil only when the voltage between the live and neutral wires exceeds the predetermined value;
a first end of the auxiliary coil is connected via the current blocking device to the live wire and a second opposite end is connected directly to the neutral wire; and
the test button is connected to the first end of the auxiliary coil.

It will be appreciated that the unit will trip if the voltage on the live line rises above a predetermined value thereby providing over-voltage protection.

The current blocking device may conveniently comprise a pair of back-to-back zener diodes in series with a current limiting resistor.

The test button may be connected directly to the first end of the auxiliary coil.

The invention is now described, by way of an example, with reference to the accompanying drawing which is a schematic circuit diagram of a portion of an earth leakage unit in accordance with the invention.

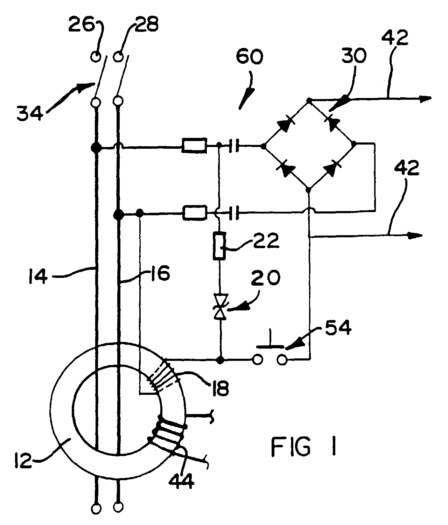

Referring to Figure 1, an earth leakage unit in accordance with the invention is indicated generally by reference numeral 60. It must be appreciated that the Figure does not show all the components of the earth leakage unit. Only those components relevant to the present invention are shown.

As with conventional earth leakage units, the earth leakage unit 60 shown in Figure 1 has a core 12 through which a live wire 14 and a neutral wire 16 pass. The live wire 14 and neutral wire 16 are connected to input terminals 26 and 28 respectively via contacts 34. In use, the terminals 26 and 28 are connected to live and neutral supply cables. The live and neutral wires 14 and 16 are also connected to output terminals which, in use, are connected to a load (usually via a circuit breaker).

A sensing coil 44 is wound on the core 12. The sensing coil 44 senses an imbalance in current in the wires 16 and 18.

The earth leakage unit 60 further has an auxiliary coil 18 wound on the core 12. A first end of the coil 18 is connected to the live wire 14 via a pair of back-to-back zener diodes 20 and a resistor 22.

The earth leakage unit 60 still further has a DC supply arrangement comprising a full wave rectifier 30 connected to the live wire 14 and neutral wire 16 via resistors and capacitors and connected to electronic circuitry (not shown) via leads 42.

In use, if there is an imbalance in the current in the live wire 14 and neutral wire 16, this causes a magnetic field to be generated in the core 12 which induces a voltage in the sensing coil 44 which is detected by the electronic circuitry (not shown) and the contact 34 is operated.

The rectifier 30 is connected to the junction between the zener diodes 20 and the coil 18 via a push button switch 54. If the switch 54 is closed current flows through the coil 18, thereby simulating a fault and causing the earth leakage unit 60 to trip. Further, if the supply voltage exceeds the predetermined value determined by the zener diodes 20, current will flow through the auxiliary coil 18 and the earth leakage unit 60 will trip.

## Claims

1. An earth leakage unit (60) which includes
a core (12);
a live input terminal (26) for connection to a live supply cable;
a neutral input terminal (28) for connection to a neutral supply cable;
a live wire (14) connected to the live input terminal at one end and connectable to a load at its other end;
a neutral wire (16) connected to the neutral input terminal at one end and connectable to the load at its other end, the live and neutral wires passing through the core;
a primary coil (44) on the core for detecting a current imbalance between the live and neutral wires;
an auxiliary coil (18) on the core;
a current blocking device (20) in series with the auxiliary coil for permitting a current flow through the auxiliary coil when a voltage is applied across the auxiliary coil and the current blocking device that is greater than a predetermined value;
a DC supply arrangement (30) connected between the live and neutral wires; and
a test button (54) connected between the DC supply arrangement and the auxiliary coil;
characterised thereby that the serially connected auxiliary coil (18) and current blocking device (20) are connected between the live and neutral wires (14, 16) such that current flows through the auxiliary coil (18) only when the voltage between the live and neutral wires exceeds the predetermined value;
a first end of the auxiliary coil (18) is connected via the current blocking device (20) to the live wire (14) and a second opposite end is connected directly to the neutral wire (16); and
the test button (54) is connected to the first end of the auxiliary coil.

2. The earth leakage unit claimed in claim 1, in which the test button is connected directly to the first end of the auxiliary coil.

## Patentansprüche

1. Fehlerstromschutzschalter (60) mit:
einem Kern (12),
einem Phaseneingangsanschluß (26) zum Anschluß einer Phase eines Versorgungskabels,
einem Nulleitereingangsanschluß (28) zum Anschluß eines Nulleiters eines Versorgungskabels,
einer Phasenleitung (14), die einerseits an den Phaseneingangsanschluß angeschlossen ist und andererseits an eine Last anschließbar ist,
einem Nulleiter (16), der einerseits an den Nulleitereingangsanschluß angeschlossen ist und andererseits an die Last anschließbar ist, wobei Phase und Nulleiter durch den Kern laufen,
einer Primärspule (44) auf dem Kern, um ein Stromgleichgewicht zwischen Phase und Nulleiter festzustellen,
einer Hilfsspule (18) auf dem Kern,
einer Stromsperreinrichtung (20), die in Reihe mit der Hilfsspule geschaltet ist, um einen Stromfluß durch die Hilfsspule zu ermöglichen, wenn an der Hilfsspule eine Spannung angelegt ist und die Stromsperrvorrichtung über einem vorbestimmten Wert liegt,
einer DC-Versorgungseinrichtung (30), die zwischen Phase und Nulleiter geschaltet ist, und
einem Prüfschalter, der zwischcn der DC-Versorgungseinrichtung und der Hilfsspule geschaltet ist,
dadurch gekennzeichnet, daß die Reihenschaltung aus Hilfsspule (18) und Stromsperreinrichtung (20) zwischen Phase (14) und Nulleiter (16) so geschaltet ist, daß der Strom durch die Hilfsspule (18) nur fließt, wenn die Spannung zwischen Phase und Nulleiter einen vorbestimmten Wert überschreitet,
ein erster Anschluß der Hilfsspule (18) über die Stromsperreinrichtung an die Phase (14) angeschlossen ist und ein zweiter, anderer Anschluß direkt an den Nulleiter (16) angeschlossen ist und
der Prüfschalter (54) an den ersten Anschluß der Hilfsspule angeschlossen ist.

2. Fehlerstromschutzschalter nach Anspruch 1, dadurch gekennzeichnet, daß der Prüfschalter direkt an den ersten Anschluß der Hilfsspule angeschlossen ist.

## Revendications

1. Unité de courant de défaut à la terre (60) qui comprend :
un noyau (12) ;
une borne d'entrée sous tension (26) pour la connection à un câble d'alimentation sous tension ;
une borne d'entrée neutre (28) pour la connection à un câble d'alimentation neutre ;
un câble sous tension (14) connecté, à une extrémité, à la borne d'entrée sous tension et, à son autre extrémité, à une charge ;
un câble neutre (16) connecté, à une extrémité, à la borne d'entrée neutre et pouvant être connecté à la charge par son autre extrémité, les câbles sous tension et neutre passant au travers dudit noyau ;
une bobine primaire (44) sur le noyau afin de détecter un déséquilibre de courant entre les câbles sous tension et neutre ;
une bobine auxiliaire (18) sur le noyau ;
un dispositif de blocage de courant (20) en série avec la bobine auxiliaire afin de permettre une circulation du courant au travers de la bobine auxiliaire lorsqu'une tension, appliquée sur la bobine auxiliaire et sur le dispositif de blocage de courant, est plus grande qu'une valeur prédéterminée ;
un système d'alimentation en courant continu (30) connecté entre les câbles sous tension et neutre et ,
un bouton test (54) connecté entre le système d'alimentation en courant continu et la bobine auxiliaire,
caractérisée en ce que la bobine auxiliaire connectée en série (18) et ledit dispositif de blocage de courant (20) sont connectés entre les câbles sous tension et neutre (14, 16) de manière que le courant circule au travers de la bobine auxiliaire (18), uniquement lorsque la tension entre les câbles sous tension et neutre dépasse la valeur prédéterminée ;
une première extrémité de la bobine auxiliaire (18) est connectée, par l'intermédiaire du dispositif de blocage de courant (20) au câble sous tension (14) et une seconde extrémité opposée est directement connectée au câble neutre (16) et,
le bouton test (54) est connecté à la première extrémité de la bobine auxiliaire.

2. Unité de courant de défaut à la terre selon la revendication 1 dans laquelle le bouton test est connecté directement à la première extrémité de la bobine auxiliaire.
